# EUROPÄISCHE PATENTSCHRIFT

(11) **EP 1 050 827 B1**
(45) Veröffentlichungstag und Bekanntmachung des Hinweises auf die Patenterteilung: **16.06.2004**
(21) Anmeldenummer: 00108742.8
(22) Anmeldetag: 22.04.2000
(51) Int. Cl.: G06F 15/02

(54) **Taschenrechner**
Pocket calculator
Calculatrice de poche

(30) Priorität: 05.05.1999 DE 19920529
(43) Veröffentlichungstag der Anmeldung: 08.11.2000
(73) Patentinhaber: E.G.O. Elektro-Gerätebau GmbH, 75038 Oberderdingen (DE)
(72) Erfinder: Kicherer, Robert, Dipl.-Ing. (FH), 75038 Oberderdingen (DE)
(74) Vertreter: Patentanwälte Ruff, Wilhelm, Beier, Dauster & Partner

(56) Entgegenhaltungen:
- WO-A-98/27760
- WO-A-99/05609
- PATENT ABSTRACTS OF JAPAN vol. 98, no. 8, 30. Juni 1998 (1998-06-30) & JP 10 084435 A (NIPPON DENKI IDO TSUSHIN KK), 31. März 1998 (1998-03-31)

## Beschreibung

Die Erfindung betrifft einen Taschenrechner gemäss dem Oberbegriff des Anspruchs 1.

Derartige Taschenrechner weisen eine Eingabeeinheit mit Eingabetasten zur Eingabe von Zahlenwerten und Funktionstasten zum Ausführen jeweils zugeordneter Rechenoperationen mit eingegebenen Zahlenwerten auf.

So dienen solche Funktionstasten beispielsweise der Ermittlung des Kehrwertes oder der Quadratwurzel.

Seit Einführung fester Wechselkurse zwischen den Währungen der Staaten der Europäischen Währungsunion sind auch Taschenrechner bekannt, die Funktionstasten aufweisen, die die Umrechnung zwischen den Währungen dieser Staaten und dem EURO vornehmen. Dies setzt jedoch voraus, daß der zur Ausführung dieser Funktionen benötigte Parameter "Währungskurs" ein fester, nicht veränderbarer oder manuell einzugebender Wert ist.

Vielfach verändert sich jedoch der Parameter immer wieder durchzuführender Rechenoperationen. So muß zum Beispiel bei der Umrechnung von EURO in nicht an diesen gebundene Währungen, wie dem US-Dollar, dem britischen Pfund oder dem YEN, die Umrechnung als Einzelberechnung ohne Verwendung einer Funktionstaste durchgeführt werden, da der Parameter der Berechnung der entsprechende Devisenkurs, sich laufend verändert. Gleiches gilt für die Ermittlung von Warenwerten, deren Einzel- oder Stückpreis sich laufend verändert. Beispiele hierfür sind Aktien, Rohstoffe, an Terminbörsen gehandelte Waren und Ähnliches.

Die WO 98/27760 beschreibt einen Taschenrechner mit einer Eingabeeinheit, welche Eingabetasten zur Eingabe von Zahlenwerten sowie Funktionstasten zum Ausführen jeweils zugeordneter Rechenoperationen mit eingegebenen Zahlenwerten aufweist. Den Funktionstasten sind Rechenoperationen zugeordnet, bei deren Ausführung veränderbare Parameter verwendet werden. Der Taschenrechner weist eine Einrichtung zum Empfangen drahtlos übertragener Signale auf. Die drahtlos übertragenen Signale umfassen wenigstens die Werte der Parameter.

Die WO 99/05609 beschreibt ein Verfahren zur Konvertierung eines Wertes bei einem Taschenrechner. Dabei wird der Konvertierungsparameter automatisch geändert oder schnurlos empfangen.

Die JP 10084435 beschreibt ein Mobilfunkttelefon mit einer Gebührenanzeige. Gebühren können in eine andere Währung konvertiert werden. Ein Konvertierungsparameter kann dabei drahtlos empfangen werden und als neuer Parameterwert gespeichert werden.

Aufgabe der Erfindung ist es daher, Taschenrechner zu schaffen, die durch Betätigen einer Funktionstaste Rechenoperationen ausführen, die einen sich ändernden Parameter verwenden, wobei der Benutzer den Wert des Parameters nicht selbst eingeben muß.

Diese Aufgabe wird bei Zugrundelegen des gattungsgemäßen Taschenrechners erfindungsgemäß durch die Merkmale des Anspruchs 1 gelöst.

Erfindungsgemäße Taschenrechner weisen eine Eingabeeinheit mit Eingabetasten und mit Funktionstasten auf. Funktionstasten sind dabei Rechenoperationen zugeordnet, bei deren Ausführung veränderbare Parameter verwendet werden. Die Werte der veränderbaren Parameter werden dazu drahtlos an eine in den Taschenrechner integrierten Empfangseinrichtung übertragen.

Beispiele für derartige, sich verändernde Parameter sind beispielsweise Devisenkurse, die Preise börslich gehandelter Rohstoffe und Erzeugnisse, aber auch der Preis einer bestimmten Ware, die vom Hersteller regelmäßig benutzt und geändert wird.

Weitere vorteilhafte Ausgestaltungen der Erfindung können auch den Unteransprüchen entnommen werden.

Die von der Empfangseinrichtung empfangenen Signale werden von einer Übermittlungsstelle ausgesandt. Hierbei sind zwei Arten der Bereitstellung der Signale zu unterscheiden, eine unidirektionale und eine bidirektionale Kommunikation.

Einerseits ist es möglich, daß die Übermittlungsstelle selbständig Signale aussendet und dabei periodisch (täglich, stündlich, viertelstündlich, ...) aktualisierte Werte der Parameter verwendet. Die Signale selbst können dabei periodisch oder fortlaufend zyklisch ausgesandt werden. Beispiele für derartige Übermittlungsstellen sind beispielsweise lokale Funksender, überregionale Funksender oder Satelliten sowie Radiosender, die das Signal als nicht hörbares Signal neben dem eigentlichen Programm ausstrahlen. Ein Betrieb könnte auch in einem Gebäude eine lokale Sendeeinrichtung betreiben, der die aktuellen Werte der Parameter an alle sich in diesem Gebäude befindlichen Taschenrechner übermittelt. Ein sehr lokaler Sender wäre ein Personalcomputer, der in einem Büro steht und Signale an sich in diesem Büro befindende Taschenrechner übermittelt. Der Personalcomputer selbst kann die Werte der Parameter laufend, beispielsweise über das Internet oder ein firmeninternes Netz, aktualisieren. Auch hier würde die Übermittlung beispielsweise periodisch stattfinden. Ein überregionaler Sender könnte die Werte der Parameter aber auch analog zu der Aussendung des Standard-Zeitsignals für Funkuhren bundesweit oder europaweit ausstrahlen. Soweit eine solche unidirektionale Kommunikation stattfindet, müssen stets die Werte aller Parameter an den Taschenrechner übertragen werden. Hier kann es auch sinnvoll sein, daß die Empfangseinrichtung auch dann in Betrieb ist und die empfangenen Signale ausliest und abspeichert, wenn der Taschenrechner selbst ausgeschaltet ist.

Andererseits kann das Signal auch auf Anforderung bereitgestellt werden. Hierzu muß der Taschenrechner zusätzlich eine Sendeeinrichtung aufweisen, die ein Anforderungssignal an die Übermittlungsstelle aussendet. Dabei können sich in Sendeeinrichtung und Empfangseinrichtung die Antenne gemeinsam teilen. Von der Übermittlungsstelle werden dann die Werte aller Parameter oder aber nur die Werte bestimmter Parameter ausgesendet und an den Taschenrechner übertragen, der das Anforderungssignal ausgesandt hat. Ein Beispiel hierfür wäre die Benutzung des Mobilfunknetzes, wie z.B. nach dem GSM-Standard. Damit eine bidirektionale Kommunikation mittels einer Mobilfunk-Einrichtung, insbesondere unter Nutzung vorhandener Mobilfunknetze möglich ist, kann es vorgesehen sein, daß die Sendeeinrichtung und die Empfangseinrichtung als Mobilfunkeinrichtung entsprechend den Einrichtungen eines Mobiltelefones ausgebildet sind.
Alternativ oder ergänzend hierzu ist es auch möglich, dass der Taschenrechner eine Schnittstelle aufweist, über die er mit einem Mobiltelefon verbindbar ist. Sobald diese Verbindung hergestellt ist, können die Sende- und Empfangseinrichtungen des Mobiltelefones für die Zwecke des Taschenrechners genutzt werden. Die Sende- und Empfangseinrichtung, derer sich der Taschenrechner bedient, befinden sich dann in einem anderen Gehäuse und können auch zu einen anderen Zweck genutzt werden. Ebenso ist es möglich, daß Taschenrechner und Mobiltelefon in einem gemeinsamen Gerät realisiert sind.

Sofern eine derartige bidirektionale Kommunikation verwendet wird, ist es sowohl möglich, das Anforderungssignal beim Einschalten des Taschenrechners auszusenden und dann die Werte aller Parameter zu übertragen, als auch das Anforderungssignal beim Betätigen der Funktionstaste auszusenden und dann lediglich die Werte der Parameter zu übertragen, die bei der der Funktionstaste zugeordneten Rechenoperation benötigt werden.

Diese Form der bidirektionalen Kommunikation empfiehlt sich auch dann, wenn die Parameter nicht öffentlich zugängliche Daten repräsentieren. So könnte ein Betrieb beispielsweise laufend aktualisierte Preise seiner Produkte an seine Händler übermitteln, ohne jeweils neue Preislisten übersenden zu müssen. Dies empfiehlt sich insbesondere dann, wenn der Produktpreis sehr stark von variablen Einflußgrößen wie Börsenkursen, Warenterminbörsen o.ä. abhängig ist.

Es ist unabhängig von der Art der Kommunikation vorteilhaft, im Taschenrechner selbst einen nicht-flüchtigen Speicher vorzusehen, so daß dann, wenn ein Empfang der an den Taschenrechner ausgesandten Signale nicht stattfindet, die zuletzt empfangenen Werte der Parameter verwendet werden können.

Die zuletzt empfangenen Werte können insbesondere im Falle einer bidirektionalen Kommunikation auch dann verwendet werden, wenn die Werte der Parameter nicht innerhalb einer vorgegebenen Zeitspanne (zwischen z.B. 10 Sekunden bei Anforderung der Parameterwerte mit Betätigung der Funktionstaste und z.B. 5 bis 10 Minuten bei Anforderung der Parameterwerte beim Einschalten des Taschenrechners) von der Empfangseinrichtung empfangen wurden.

Um den Benutzer über die Aktualität der von ihm benutzten Werte zu informieren, ist es erfindungsgemäss vorgesehen, den Parametern insgesamt oder jedem für sich genommen einen Zeitwert zuzuordnen. Dieser Zeitwert repräsentiert entweder die Empfangszeit des oder der Parameter durch den Taschenrechner (sinnvoll beispielsweise bei periodischer Aussendung und unidirektionaler Kommunikation) oder den Zeitpunkt der Bestimmung des Wertes des Parameters (sinnvoll beispielsweise bei bidirektionaler Kommunikation). Der Zeitwert wird dann zusammen mit dem bei der Rechenoperation ermittelten Ergebniswert ausgegeben.

Weitere Merkmale und Einzelheiten der Erfindung ergeben sich aus der nachfolgenden Beschreibung von bevorzugten Ausführungsformen in Verbindung mit den Zeichnungen und den Unteransprüchen. Hierbei können die einzelnen Merkmale jeweils für sich allein oder zu mehreren in Kombination miteinander bei einer Ausführungsform verwirklicht sein.

Ein Ausführungsbeispiel der Erfindung ist in der Zeichnung dargestellt. Es zeigen:
- Fig. 1: die schematische Darstellung eines erfindungsgemäßen Taschenrechners und
- Fig. 2: die schematische Darstellung eines Taschenrechners mit bidirektionaler Kommunikation sowie die schematische Darstellung einer Übermittlungsstelle zur Übermittlung der Werte der Parameter.

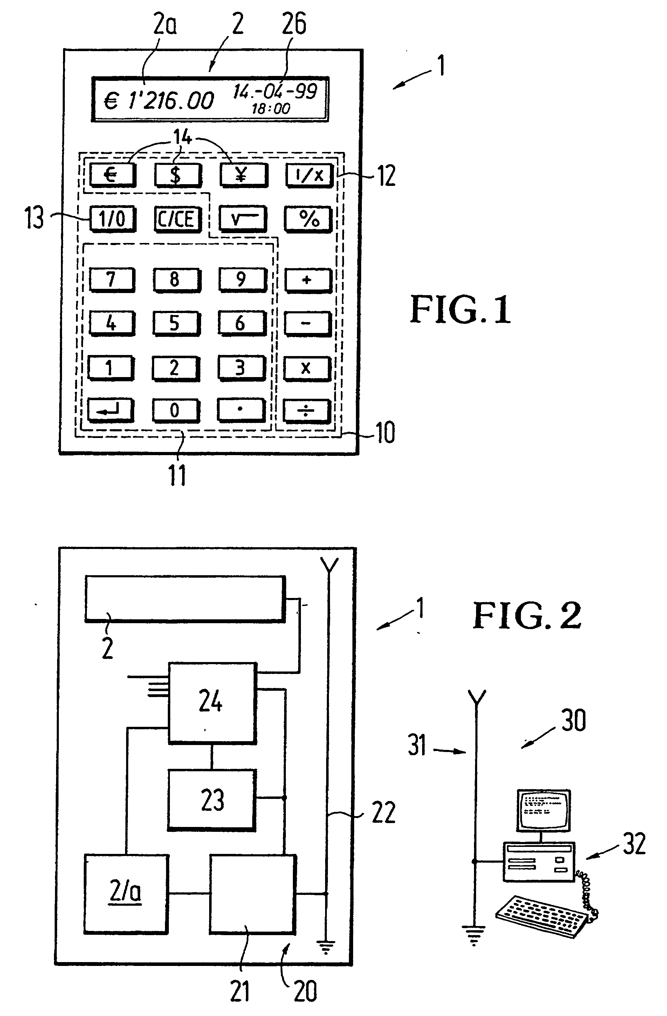

Die Fig. 1 zeigt in schematischer Darstellung einen Taschenrechner, der erfindungsgemäß ausgebildet ist. Derartige Taschenrechner sind sehr klein, preiswert, mobil und können unabhängig von verdrahteten Netzen betrieben werden. Darüber hinaus ist die zum Betrieb des Rechners notwendige Engerie so gering, daß auf eine Batterie verzichtet werden kann und der

Antrieb ggf. allein durch Solarzellen erfolgen kann. Derartiges ist bei nicht erfindungsgemäß ausgebildeten Taschenrechnern gang und gäbe. Der erfindungsgemäße Taschenrechner 1 weist eine Anzeige 2 zum Anzeigen des Ergebnisses 2a oder von eingegebenen Werten auf sowie einen Anzeigenbereich 2b zum Anzeigen des Zeitwertes. Der Zeitwert repräsentiert entweder den Zeitpunkt der Ermittlung des benutzten Parameters oder aber den Zeitpunkt, zu dem der Parameter festgelegt wurde und später an den Taschenrechner übermittelt wurde. Ferner weist der Taschenrechner 1 eine Eingabeeinheit 10 auf, die sich in Eingabetasten 11 und in Funktionstasten 12 gliedert. Einem Teil der Funktionstasten, nämlich den Währungstasten 14, sind Rechenoperationen zugeordnet, bei denen Parameter benötigt werden, die zeitlich variabel sind.

Es wird nun vorausgesetzt, daß aktuelle Werte der Parameter, im vorliegenden Beispiel die Wechselkurse zwischen EURO und US-Dollar, EURO und japanischem YEN, US-Dollar und japanischem YEN an den Rechner übermittelt worden sind. Der Rechner könnte nun so programmiert sein, daß zunächst die Währungstaste 14 zu betätigen ist, in der der umzurechnende Betrag eingegeben wird. Nach Eingabe des umzurechnenden Betrages über die Eingabetasten 11 erfolgt mit dem Drücken der zweiten Währungstaste 14 die Umrechnung des Betrages in die gewünschte Währung. Auf der Anzeige wird dann das Ergebnis der Umrechnung 2a und der Zeitwert 2b angezeigt. Der Zeitwert repräsentiert dabei beispielsweise den Zeitpunkt der Festsetzung des Umrechnungskurses zwischen den beiden Währungen.

Soll beispielsweise ein Betrag von 1313,28 US-Dollar in EURO umgerechnet werden, so muß zunächst die den US-Dollar entsprechende, mit "S" bezeichnete Währungstaste betätigt werden. Nun.wird über die Eingabetasten 11 der Betrag 1313,28 eingegeben. Zur Umrechnung in EURO wird die mit dem Währungssymbol für EURO bezeichnete Währungstaste 14 betätigt.

Das Ergebnis 2a von beispielsweise 1216,00 EURO wird nun in der Anzeige zusammen mit dem Zeitwert 2b, hier der 14-04-1999 um 18:00 Uhr, angezeigt.

Die Fig. 2 zeigt die schematische Darstellung eines Taschenrechners 1 mit seinen Funktionselementen sowie die schematische Darstellung einer Übermittlungsstelle 30.

Im vorliegenden Fall erfolgen die Berechnung und die Steuerung der Funktionen innerhalb des Taschenrechners durch die zentrale Recheneinheit (CPU) 24. In dieser zentralen Recheneinheit 24 werden zum einen die in der Eingabeeinheit 10 eingegebenen Signale verarbeitet. Das Ergebnis der Rechenoperationen wird über die Anzeige 2 dargestellt. Zur Durchführung der in diesem Fall bidirektionalen Kommunikation weist der Taschenrechner eine Sende- und eine Kommunikationseinrichtung 20 auf. Diese Kommunikationseinrichtung besteht zunächst aus einer Empfangseinrichtung 21 einer Sendeeinrichtung 21a und eine gemeinsam von Sende- und Empfangseinrichtung benutzten Antenne 22. Dabei kann es sich bei der Sende- und Empfangseinrichtung auch um ein Mobiltelefon handeln, das über eine geeignete Schnittstelle an den Taschenrechner anschließbar ist. Es ist auch möglich, daß Taschenrechner und Mobilfunkeinrichtung (tragbares Telefon nach GSM-Standard o.ä.) in einem Gerät integriert sind. Alternativ ist es möglich, daß Sendeeinrichtung 21a und Empfangseinrichtung 21 nach einem Mobilfunkstandard arbeiten. In beiden Fällen können bestehende Mobilfunknetze zur Übertragung der Daten verwendet werden.

Die Werte der an die Empfangseinrichtung übertragenen Parameter werden in dem nicht-flüchtigen Speicher 23, der von der CPU 24 ausgelesen werden kann, abgespeichert. Zur bidirektionalen Kommunikation wird zunächst von der Sendeeinrichtung 21a entweder bei Betätigung des Ein- und Ausschalters 13 der Eingabeeinheit 10 oder bei Betätigen einer Währungstaste 14 ein Anforderungssignal an die Übermittlungsstelle 30 ausgesandt. Die Übermittlungsstelle 30 besteht aus einer Sendeund Empfangsantenne 31 sowie einer Steuereinheit 32. In der Steuereinheit 32 werden die aktuellst verfügbaren Werte der Parameter abgespeichert und laufend aktualisiert. Trifft nun von einem Taschenrechner 1 ein Anforderungssignal ein, so wird von der Steuereinheit 32 über die Antenne 31 an den Taschenrechner 1 ein Signal übermittelt, das zumindest die Werte der Parameter enthält, die an den Taschenrechner übermittelt werden sollen. Über-die Antenne 22 werden diese Signale von dem Taschenrechner empfangen und von der Empfangseinrichtung 21 dekodiert. Im nicht-flüchtigen Speicher 23 werden nun die entsprechenden Werte der Parameter und ggf. die zugeordneten Werte des Zeitwertes abgespeichert. Werden in der CPU nun Rechenoperationen durchgeführt, bei denen die Parameter oder Parameter benutzt werden, so werden Parameter und zugehöriger Zeitwert aus nicht-flüchtigem Speicher 23 in die CPU 24 eingelesen und-die entsprechende Rechenoperation durchgeführt.

Bei einem Betrieb mit Solarzellen oder ähnlichen, nicht ständig zur Verfügung stehenden Stromquellen ist es vorteilhaft, einen aufladbaren Speicher für elektrische Energie (Akku oder Kondensator) zum zwischenzeitlichen Betrieb und/oder zum Halten des Speichers zu verwenden. Wenn die die Parameter enthaltenden Signale in kurzer zeitlicher Aufeinanderfolge gesendet werden, kann es sinnvoll sein, die Empfangseinheit nur bei Bedarf, z.B. beim Einschalten oder bei Durchführung der Rechenoperationen einzuschalten, um Energie zu sparen.

## Patentansprüche

1. Taschenrechner (1) mit einer Eingabeeinheit (10), die Eingabetasten (11) zur Eingabe von Zahlenwerten und Funktionstasten (12) zum Ausführen jeweils zugeordneter Rechenoperationen mit eingegebenen Zahlenwerten aufweist, wobei Funktionstasten (12) Rechenoperationen zugeordnet sind, bei deren Ausführung veränderbare Parameter verwendet werden und daß der Taschenrechner eine Empfangseinrichtung (20) zum Empfangen drahtlos übertragener Signale aufweist, wobei die drahtlos übertragenen Signale wenigstens die Werte der Parameter umfassen, **dadurch gekennzeichnet, dass** ein Zeitwert (2b) zugeordnet ist, der entweder die Empfangszeit des Parameters durch den Taschenrechner oder den Zeitpunkt der Bestimmung des Wertes des Parameters repräsentiert und abgespeichert wird, wobei mit Ausgabe des bei der Rechenoperation ermittelten Ergebniswertes (2a) auch der Zeitwert (2b) ausgegeben wird.

2. Taschenrechner nach Anspruch 1, **dadurch gekennzeichnet, daß** die Werte der Parameter in einem nicht-flüchtigen Speicher (23) abgelegt sind.

3. Taschenrechner nach Anspruch 1 oder 2, **dadurch gekennzeichnet, daß** die Empfangseinrichtung (21) auch dann in Betrieb ist, wenn der Taschenrechner nicht eingeschaltet ist.

4. Taschenrechner nach einem der Ansprüche 1 bis 3, **dadurch gekennzeichnet, daß** der Taschenrechner eine Sendeeinrichtung (21a) aufweist, die an eine Übermittlungsstelle (30) ein Anforderungssignal übermittelt, wobei aufgrund des Empfangs des Anforderungssignals aktuelle Werte von Parametern von der Übermittlungsstelle (30) an die Empfangseinrichtung (21) übertragen werden.

5. Taschenrechner nach einem der Ansprüche 1 bis 4, **dadurch gekennzeichnet, daß** ein Anforderungssignal mit dem Einschalten des Taschenrechners ausgesandt wird, wobei dann die Werte aller Parameter von der Übermittlungsstelle an die Empfangseinrichtung übertragen werden.

6. Taschenrechner nach Anspruch 4 oder 5, **dadurch gekennzeichnet, daß** ein Anforderungssignal mit dem Betätigen einer Funktionstaste (14) ausgesandt wird, wobei dann lediglich die Werte der Parameter übermittelt werden, die zur Ausführung der Rechenoperation erforderlich sind, die der betätigten Funktionstaste (14) zugeordnet ist.

7. Taschenrechner nach einem der Ansprüche 4 bis 6, **dadurch gekennzeichnet, daß** dann, wenn die Werte der Parameter nicht innerhalb einer vorgegebenen Zeitspanne nach Aussenden des Anforderungssignals übermittelt werden, die zuletzt empfangenen Werte der Parameter zur Ausführung der Rechenoperation herangezogen werden.

8. Taschenrechner nach einem der vorhergehenden Ansprüche, **dadurch gekennzeichnet, daß** die Empfangseinrichtung (20) nur zeitweise, periodisch und/oder bei Ausführung eines Benutzungsvorganges wie Einschalten des Rechners o.dgl., in Betrieb genommen wird.

9. Taschenrechner nach einem der vorhergehenden Ansprüche, **gekennzeichnet durch** eine Solar-Stromquelle und einen davon aufladbaren Stromspeicher.

10. Taschenrechner nach einem der vorhergehenden Ansprüche, **gekennzeichnet durch** die Übertragung der Signale mittels eines Mobilfunknetzes.

## Claims

1. Pocket calculator (1) with an input unit (10), which has input keys (11) for inputting numerical data and function keys (12) for performing in each case associated arithmetic operations with inputted numerical data, in which with the function keys (12) are associated arithmetic operations, during whose implementation use is made of variable parameters and the pocket calculator has a receiving equipment (20) for receiving signals transmitted in wireless manner, the wireless transmitted signals at least comprising the values of the parameters, **characterized in that** a time value (2b) is associated and represents either the reception time of the parameter by the pocket calculator or the time point of the determination of the value of the parameter and is stored and on outputting the result value (2a) determined during the arithmetic operation the time value (2b) is also outputted.

2. Pocket calculator according to Claim 1, **characterized in that** the values of the parameters are filed in a non-volatile memory (23).

3. Pocket calculator according to claim 1 or 2, **characterized in that** the receiving equipment (21) is still in operation when the pocket calculator is not switched on.

4. Pocket calculator according to one of the claims 1 to 3, **characterized in that** the pocket calculator has a transmission equipment (21a), which transmits a request signal to the transmitting station (30) and as a result of the reception of the request signal updated values of parameters are transmitted from the transmitting station (30) to the receiving equipment (21).

5. Pocket calculator according to one of the claims 1 to 4, **characterized in that** a request signal is emitted on switching on the pocket calculator and then the values of all the parameters are transmitted by the transmitting station to the receiving equipment.

6. Pocket calculator according to claim 4 or 5, **characterized in that** a request signal is emitted on operating a function key (14) and then only the values of the parameters are transmitted which are necessary for performing the arithmetic operation associated with the operated function key (14).

7. Pocket calculator according to one of the Claims 4 to 6, **characterized in that**, if the values of the parameters are not transmitted within a predetermined time period after emitting the request signal, the last received values of the parameters are used for performing the arithmetic operation.

8. Pocket calculator according to one of the preceding claims, **characterized in that** the receiving equipment (20) is only put into operation temporarily, periodically and/or on performing a use process such as the switching on of the calculator or the like.

9. Pocket calculator according to one of the preceding Claims, **characterized in that** a solar power source and a battery or accumulator rechargeable by it are provided.

10. Pocket calculator according to one of the preceding Claims, **characterized by** the transmission of the signals by means of a mobile radio network.

## Revendications

1. Calculatrice de poche (1) avec une unité d'entrée (10) qui présente des touches d'entrée (11) pour l'entrée de valeurs numériques et des touches de fonction (12) auxquelles sont affectées des opérations de calcul pour l'exécution de celles-ci avec des valeurs numériques entrées, sachant que pour l'exécution des opérations de calcul affectées aux touches de fonction (12) des paramètres variables peuvent être utilisés et que la calculatrice de poche présente un dispositif de réception (20) pour recevoir des signaux transmis sans fil, et que les signaux transmis sans fil comprennent au moins les valeurs des paramètres,
**caractérisée en ce qu'**une valeur-temps (2b), représentant soit le temps de réception du paramètre par la calculatrice de poche, soit le moment de détermination de la valeur du paramètre, est attribuée et enregistrée, sachant que lors de l'affichage du résultat (2a) des opérations de calcul, la valeur-temps (2b) apparaît également.

2. Calculatrice de poche selon la revendication 1, **caractérisée en ce que** les valeurs des paramètres sont enregistrées dans une mémoire non volatile (23).

3. Calculatrice de poche selon la revendication 1 ou 2, **caractérisée en ce que** le dispositif de réception (21) est également en service lorsque la calculatrice de poche n'est pas en marche.

4. Calculatrice de poche selon l'une des revendications 1 à 3, **caractérisée en ce que** la calculatrice de poche présente un dispositif d'émission (21a) qui transmet un signal de demande à un centre de transmission (30), sachant que suite à la réception du signal de demande, le centre de transmission (30) transmet des valeurs actuelles de paramètres au dispositif de réception (21).

5. Calculatrice de poche selon l'une des revendications 1 à 4, **caractérisée en ce qu'**un signal de demande est envoyé lors de la mise en marche de la calculatrice de poche, sachant que les valeurs de tous les paramètres sont ensuite transmises au dispositif de réception par le centre de transmission.

6. Calculatrice de poche selon la revendication 4 ou 5, **caractérisée en ce qu'**un signal de demande est envoyé lorsqu'une touche de fonction (14) est actionnée, sachant qu'ici seules les valeurs nécessaires à l'exécution de l'opération de calcul affectée à la touche de fonction (14) sont transmises.

7. Calculatrice de poche selon l'une des revendications 4 à 6, **caractérisée en ce que** les dernières valeurs reçues sont utilisées pour l'exécution des opérations de calcul, lorsque, suite à l'envoi du signal de demande, les valeurs ne sont pas transmises dans un intervalle de temps consigné.

8. Calculatrice de poche selon l'une des revendications précédentes, **caractérisée en ce que** le dispositif de réception (20) est mis en service seulement de manière momentanée, périodiquement et/ou lors de l'exécution d'un procédé d'utilisation tel que, par exemple, la mise en marche de la calculatrice.

9. Calculatrice de poche selon l'une des revendications précédentes, **caractérisée par** une source d'énergie solaire et une unité de stockage électrique chargée par l'énergie solaire.

10. Calculatrice de poche selon l'une des revendications précédentes, **caractérisée par** la transmission des signaux au moyen d'un réseau de téléphonie mobile.
